# EUROPEAN PATENT APPLICATION

(11) **EP 1 411 288 A1**
(43) Date of publication of application: **21.04.2004**
(21) Application number: 02747701.7
(22) Date of filing: 19.07.2002
(51) Int. Cl.: F16L 15/00

(54) **THREADED JOINT FOR STEEL TUBE**

(30) Priority: 25.07.2001 JP 2001224918
(71) Applicant: SUMITOMO METAL INDUSTRIES, LTD., Osaka-shi, Osaka 541-0041 (JP)
(72) Inventor: ANRAKU, Toshiro, c/o Sumitomo Metal Ind., Ltd., Osaka-shi, Osaka 541-0041 (JP); GOTO, Kunio, c/o Sumitomo Metal Ind., Ltd., Osaka-shi, Osaka 541-0041 (JP); MATSUMOTO, Keishi, c/o Sumitomo Metal Ind., Ltd., Osaka-shi, Osaka 541-0041 (JP); NAGASAKU, Shigeo, c/o Sumitomo Metal Ind., Ltd., Osaka-shi, Osaka 541-0041 (JP)
(74) Representative: Senior, Alan Murray
(86) International application number: PCT/JP2002/007355
(87) International publication number: WO 2003/010460

(57) **Abstract**

A threaded joint for steel pipes which is capable of metal-to-metal sealing and which can be subjected to repeated fastening and unfastening without the application of a liquid lubricant containing a heavy metal powder comprises a pin and a box each having a contact surface including a threaded portion and an unthreaded metal contact portion. The contact surface of at least one of the pin and the box are coated with an undercoating layer and a lubricating coating layer atop it. The undercoating layer is a porous metal coating having a porosity of 5 - 80% and a thickness of 1 - 30 µm and preferably a hardness of 50 - 250 Hv. The lubricating coating is a solid lubricating coating or a liquid lubricating coating, the latter containing substantially no heavy metal powders. The total thickness of the undercoating layer and the lubricating coating layer is at most 100 µm.

## Description

### Technical Field

This invention relates to a threaded joint for steel pipes suitable for use in connecting oil well pipes used for oil well drilling. More particularly, it relates to a threaded joint for steel pipes which does not require the application of compound grease containing heavy metal powder, which was conventionally carried out before each fastening in order to prevent galling, and which has excellent galling resistance and rust preventing properties.

### Background Art

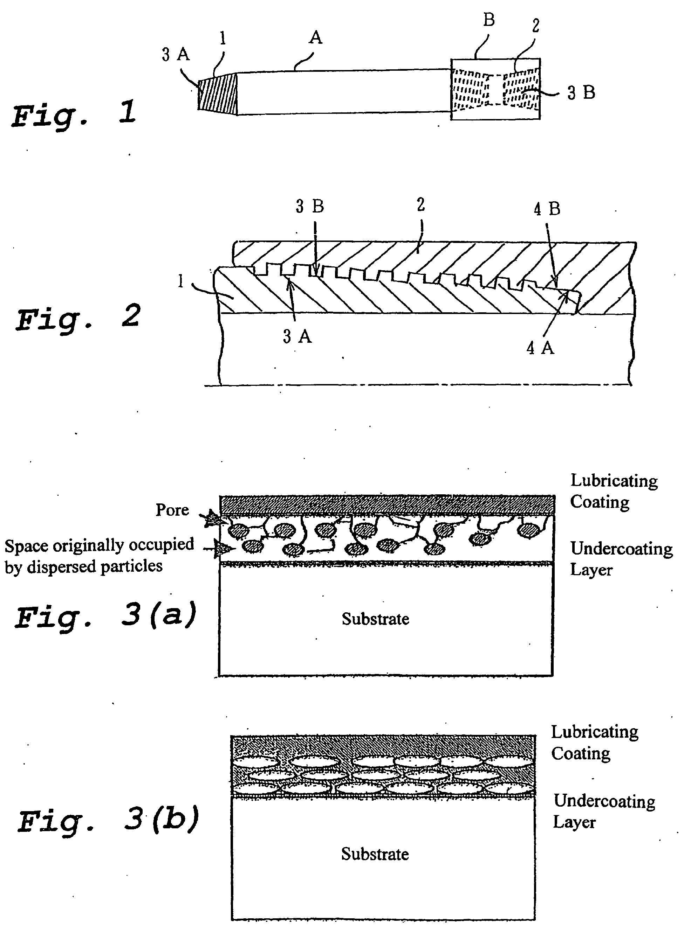

Oil well pipes which are steel pipes used in the drilling of oil wells are connected with each other by a threaded joint for steel pipes having a pin-box structure, which is comprised of a pin having a male thread and a box having a female thread. As schematically shown in Figure 1, a male thread 3A is normally formed on the outer circumferential surface at both ends of a steel pipe A to form a pin 1, and a female thread 3B is formed on both sides of the inner circumferential surface of a separate joint member in the form of a sleeve-shaped coupling B to form a box 2. As shown in Figure 1, the steel pipe A is normally shipped in a state in which a coupling B is previously connected to one end.

This threaded joint for steel pipes is subjected to axial tensile forces caused by the weight of the steel pipe and the coupling and compound pressures including internal and external pressures underground, and it is also subjected to heat underground, so it is required that it maintain airtightness (sealability) without being damaged even in such an environment. In addition, during the process of lowering oil well pipes, it is often the case that a joint which has once been fastened is unfastened and then refastened. Therefore, according to API (American Petroleum Institute), it is desired that there be no occurrence of flaws due to galling and that airtightness be maintained even if fastening and unfastening are carried out ten times for tubing joints and three times for casing joints, which have a larger diameter.

In recent years, in order to improve airtightness, special threaded joints which are capable of metal-to-metal sealing have come to be generally used. In this type of threaded joint, as shown in Figure 2, unthreaded metal contact portions 4A and 4B are respectively formed on the end of a pin 1 having a male threaded portion 3A and on the interior of a box 2 having a corresponding female threaded portion 3B. In the fastened state shown in Figure 2, the threaded portion 3A or 3B and the unthreaded metal contact portion 4A or 4B form a contact surface of the pin 1 or the box 2. The unthreaded metal contact portions 4A and 4B of the pin 1 and the box 2 form a metal-to-metal seal portion and contribute to an increase in airtightness.

In such a threaded joint capable of metal-to-metal sealing, a powerful liquid lubricant referred to as a compound grease is used in order to prevent galling of the contact surfaces and particularly of the unthreaded metal contact portions. This grease is applied to the contact surface of at least one of the pin and the box prior to fastening. However, this grease contains a large amount of harmful heavy metal powder, and when the grease which is squeezed out to the periphery during fastening is cleaned with a cleaning agent, the compound grease and the cleaning agent flow out into the ocean or the soil and cause environmental pollution, and this has come to be considered a problem. In addition, there was the problem that the cleaning and application of grease which were repeated before each fastening lowered the operating efficiency.

As threaded joints for steel pipes which do not need the application of a compound grease, JP-A 08-103724, JP-A 08-233163, JP-A 08-233164, and JP-A 09-72467 disclose threaded joints in which a solid lubricating coating comprising a resin as a binder and molybdenum disulfide or tungsten disulfide as a solid lubricant is applied to a threaded portion and an unthreaded metal contact portion (namely, to the contact surface) of at least one of a pin and a box.

In these Japanese patent publications, in order to increase the adhesion between the solid lubricating coating and the substrate steel, it is disclosed to form, as an undercoating layer for the solid lubricating coating, a manganese phosphate chemical conversion coating layer or a combination of a nitride layer and a manganese phosphate chemical conversion coating layer, or to provide the contact surface with surface irregularities having an Rmax of 5 - 40 µm.

In JP-A 08-105582, it is disclosed to form a nitride layer, an iron or iron alloy plating layer, and a solid lubricating coating on a threaded joint for oil well pipes made of stainless steel containing at least 10% Cr.

In the drilling of crude oil, deep oil wells have been increasing, and it is not unusual for the temperature of use of oil well pipes to reach 150 - 250°C. However, a conventional threaded joint for steel pipes which is capable of metal-to-metal sealing and which does not require the application of a compound grease by forming a solid lubricating coating on the contact surfaces cannot exhibit a high galling resistance such as can be obtained when a compound grease is applied, and flaws due to galling referred to as galling may occur when fastening and unfastening are repeated only a few times. In addition, if this type of threaded joint is maintained at a high temperature, a solid lubricating coating easily peels off, and the galling preventing effect is inadequate. The three-layer coating described in JP-A 08-105582 has a complicated treatment process and becomes expensive, and in addition, galvanic corrosion takes place between the stainless steel substrate and the iron-based plating, and this leads to a deterioration in corrosion resistance.

It is an object of the present invention to provide a threaded joint for steel pipes capable of metal-to-metal sealing, which has excellent galling resistance, even though it is a threaded joint made of a high Cr steel which is a material relatively susceptible to galling, and which can prevent the occurrence of galling and a decrease in airtightness upon repeated fastening and unfastening without using a liquid lubricant containing heavy metal powder such as a compound grease when used in drilling for crude oil in high temperature environments such as in deep oil wells.

### Disclosure of the Invention

In the past, a measure taken to increase the adhesion of a solid lubricating coating was to roughen the substrate surface by machining or coating with phosphate treatment or the like. However, there is a limit to the improvement in the adhesion of a solid lubricating coating which relies upon the anchoring effect of surface irregularities of its substrate, since a clear interface exists between the solid lubricating coating and the substrate. In particular, at a high temperature of 200°C or above, due to the difference in the degree of thermal expansion between the resin of the solid lubricating coating and the substrate steel, peeling of the coating can easily take place at the interface between the solid lubricating coating and the substrate steel, and this leads to a decrease in galling resistance.

In the present invention, an undercoating layer is formed from a porous metal so that the solid lubricating coating can penetrate into the entire undercoating layer and the above-described clear interface is eliminated. Forming a solid lubricating coating atop this porous metallic undercoating layer guarantees a good adhesion of the solid lubricating coating even at high temperatures, and excellent galling resistance is obtained. The same excellent galling resistance is obtained when a liquid lubricating coating is formed instead of a solid lubricating coating.

This invention is a threaded joint for steel pipes comprising a pin and a box each having a contact surface including a threaded portion and an unthreaded metal contact portion,
characterized in that the contact surface of at least one of the pin and the box is coated with a metallic undercoating layer and a lubricating coating layer formed atop it, the undercoating layer has a porosity of 5 - 80% and a thickness of 1 - 30 µm, the lubricating coating layer is comprised of a solid lubricating coating or a liquid lubricating coating containing substantially no heavy metal powders, and the total thickness of the undercoating layer and the lubricating coating layer is at most 100 µm. The undercoating layer preferably has a hardness of 50 - 250 Hv.

### Brief Description of the Drawings

Figure 1 is a schematic view showing a typical assembly of a steel pipe and a threaded coupling at the time of shipment of the steel pipe.
Figure 2 is a schematic view showing a typical connecting portion of a threaded joint for steel pipe.
Figures 3(a) and (b) are explanatory views showing the typical structure of an undercoating layer and a lubricating coating of a threaded joint for steel pipes according to the present invention, Figure 3 (a) showing the case in which the undercoating layer is formed from a dispersed plating coating, and Figure 3(b) showing the case in which the undercoating layer is a coating formed by the blast coating method or the flame spraying method.

### Description of Embodiments of the Invention

As shown in Figure 2, a threaded joint for steel pipes according to the present invention is formed from a pin and a box each having a threaded portion and an unthreaded metal contact portion. Namely, the pin 1 has a threaded portion 3A and an unthreaded metal contact portion 4A, and the box 2 has a threaded portion 3B and an unthreaded metal contact portion 4B. Normally, as shown in the figure, the pin 1 is formed on the outer circumferential surface of the end of a steel pipe, and the box 2 is formed on the inner circumferential surface of a coupling.

The threaded portions and the unthreaded metal contact portions of the pin and the box are contact surfaces of the threaded joint. These contact surfaces and particularly the unthreaded metal contact surfaces which form a metal-to-metal seal are required to have galling resistance and airtightness.

According to the present invention, a porous metallic undercoating layer and atop this a lubricating coating layer which is either a solid lubricating coating or a liquid lubricating coating, the liquid lubricating coating containing substantially no heavy metal powder, are formed on the contact surface of at least one of the pin and the box. As a result, the required properties can be imparted to the contact surfaces of a threaded joint without using a compound grease, and this performance can be exhibited effectively even in a high temperature environment. This effect can be obtained by treating the contact surface of at least one of the pin and the box in the above-described manner. When treating the contact surface of just one member, it is easier to treat the contact surface formed on the shorter membe, i.e., the coupling (normally the contact surface of the box), but it is also possible to perform treatment on the contact surface formed on the steel pipe. Of course, the contact surfaces of both the pin and the box may be treated.

In a threaded joint according to the present invention, the material of the lubricating coating which is the upper layer (below, for convenience, this will be referred to as the lubricant) penetrates into the pores of the porous undercoating layer and impregnates the pores, so the lubricating coating is strongly secured to the undercoating layer. On the other hand, the undercoating layer is metallic, so it has strong adhesion to the steel substrate which is also metallic. As a result, the adhesion of the lubricating coating to the steel substrate is enormously increased, and a good preventive effect with respect to the occurrence of galling is obtained. In addition, even if the lubricating coating is lost due to wear or damage or it is used up from a contact surface due to a local increase in pressure, the lubricant impregnated in the undercoating layer is supplied to the surface of the undercoating layer, so the occurrence of galling can be prevented. Therefore, it is possible to impart an extremely good galling resistance to a threaded joint for steel pipes.

In order to obtain this effect, the undercoating layer is made a porous coating having a porosity of 5 - 80%. If the porosity of the undercoating layer is less than 5%, the amount of the lubricant which is maintained by impregnation in the pores of the undercoating layer is small, the supply of lubricant under high pressure conditions becomes inadequate, and galling can take place. On the other hand, if the porosity of the undercoating layer exceeds 80%, the strength of the undercoating layer becomes inadequate, deformation of the undercoating layer takes place at the time of fastening, and galling can take place. The porosity of the undercoating layer is preferably 10 - 70% and more preferably 10 - 50%.

In this invention, measurement of the porosity of the undercoating layer is carried out by observing a fixed area at the center of a cross section in the longitudinal direction of the undercoating layer with an optical microscope, calculating the proportion of area occupied by pores, and then finding the average for 5 fields of view.

In the present invention, an undercoating layer is metallic, and it is soft compared to a phosphate coating. The hardness of the metallic undercoating layer is preferably a Vickers hardness (Hv) in the range of 50 - 250. If the hardness is smaller than 50 Hv, wear of the undercoating layer becomes rapid at the time of fastening of the threaded joint, and there are cases in which galling takes place when fastening and unfastening are repeated a number of times. If the hardness of the undercoating layer exceeds 250 Hv, the coating becomes too hard, and it may scratch the pin or the box at the time of fastening, and the galling resistance decreases.

There are no particular limitations on a method of forming an undercoating layer as long as it can form a porous metallic coating having a porosity of 5 - 80%. Such an undercoating layer can be formed by the following plating or coating methods, for example.

### (1) Electroplating method:

Electroplating is carried out in a plating solution containing dispersed particles which can be subsequently removed, and a plating coating containing dispersed particles (a dispersed plating coating) is formed while the plating solution is stirred to uniformly disperse the particles in the solution. The particles which are used may be a polymer powders such as PTFE (polytetrafluoroethylene) powder or iron powder, but they are not limited to these materials. It is usually preferred that the diameter of the particles be on the order of 5 µm.

Thereafter, the dispersed particles are removed from the resulting dispersion plating coating. When the dispersed particles are a polymer powder, they are removed by combusting and gasifying the particles by heating. When the particles are iron powder, they can be removed by pickling. In this manner, in addition to the locations where the dispersed particles were present, the discharge paths at the time of gasification of the particles or the path of penetration of a pickling solution become pores, and a porous electroplated coating is formed. The porosity of this electroplated coating can be adjusted by the amount of the dispersed particles in the plating solution.

The state of the pores in the undercoating layer formed by this method is schematically shown in Figure 3(a). As shown in this figure, at the time of forming a lubricating coating atop the undercoating layer, a portion of the material of the lubricating coating (lubricant) penetrates into the pores, so the undercoating layer can retain the lubricant.

### (2) Blast coating method or flame spraying method

The blast coating method is a method in which solid particles (blast particles) are impinged on a surface for coating. The flame spraying method is a method in which a metal is melted and blown away by a combustion flame or an arc or the like and is built up on a surface. In either case, a coating is formed by the accumulation of flattened particles, and as schematically shown in Figure 3(b), a porous coating having cavities remaining between particles is formed. In this case, lubricant is held in the pores made from these cavities.

As disclosed in JP-B 59-9312, for example, the blast coating method can be carried out by using, as blast particles, particles having a core of iron or an iron alloy coated with zinc or a zinc alloy. In this case, the zinc or zinc alloy on the surface of the blast particles adheres to the surface to be coated, and a porous coating layer made from the zinc or zinc alloy is formed.

JP-A 62-258283 states that this blast coating can be formed on the surface of a threaded joint for oil well pipes, but this technology is premised on the use of a compound grease containing a large amount of heavy metal particles. Namely, galling resistance is guaranteed by use of a compound grease.

The flame spraying method is well known. In addition to the methods described above, various methods are known such as ones using a plasma or energy of an explosion as a heat source. Any of these may be used as long as they can form a coating having a porosity within the range specified by the present invention. The flame spraying method can be applied to almost all metals and alloys.

The porosity of a porous coating formed by these methods can be controlled in the case of the blast coating method by the particle diameter and the blasting speed of the blast particles. In the case of the flame spraying method as well, the porosity of the coating depends upon the particle diameter of the metal particles which are flame sprayed and the flame spraying speed. These can be adjusted by conditions such as the gas flow rate, the temperature, and the environment employed in flame spraying.

There are no particular restrictions on the material of the metal of the undercoating layer, but it is preferable to use a metal or an alloy which can improve the rust preventing properties of an oil well pipe. If the undercoating layer is formed of a metal having excellent corrosion resistance, even though this layer is porous, the pores are filled with the material of the lubricating coating, so the undercoating layer can adequately protect the threaded joint, and excellent rust preventing properties can be imparted by the undercoating layer.

A preferred material for the undercoating layer is zinc or a zinc alloy which is base relative to iron and which exhibits excellent rust-preventing properties due to its sacrificial anticorrosion ability, as well as metals such as Cu, Ni, Sn, Cr, Al, Co, and precious metals (Au, Ag, Pd, etc.) and alloys thereof which themselves have excellent rust-preventing properties.

The thickness of the undercoating layer is 1-30 µm. If the thickness is less than 1 µm, the amount of lubricant which is held by the undercoating layer is small, and the galling resistance becomes inadequate. If the thickness of the undercoating layer exceeds 30 µm, its strength decreases, and coating peeling takes place at the interface between the substrate steel of the oil well pipe and the undercoating layer at the time of fastening. The thickness of the undercoating layer is preferably 5 - 15 µm.

A liquid or solid lubricating coating is formed atop the above-described porous metallic undercoating layer. A liquid lubricating coating may be a material like a conventional lubricating oil, but a compound grease containing a large amount of heavy metals is not employed. A solid lubricating coating is a coating in which a powder of a solid lubricant is bonded with a suitable binder, and it is formed by applying a liquid coating composition in which the binder is dissolved in a suitable solvent followed by drying of the resulting coating while heating, if necessary.

With either a liquid or solid lubricating coating, a portion of the liquid material which is applied at the time of coating formation penetrates into the pores in the undercoating layer, and the lubricant is impregnated in and held by the undercoating layer. In this manner, by strong adhesion of the lubricating coating to the undercoating layer and by supply of lubricant impregnated in the undercoating layer under a high pressure, excellent galling resistance is obtained even without applying a compound grease containing heavy metal powder.

The total thickness of the undercoating layer and the upper lubricating coating is at most 100 µm. If the total thickness exceeds 100 µm, the pressure applied at the time of fastening increases, and galling can take place. The total thickness is preferably at most 80 µm.

A liquid lubricating coating can be formed from oils used in lubricating oils such as mineral oil, synthetic ester oils, animal or vegetable oils, or the like. One or more additives such as rust preventing additives or extreme pressure additives known as additives for lubricating oils may be added to this oil. When these additives are themselves liquids, the additives by themselves can be used in the formation of a liquid lubricating coating.

Basic metal salts of an organic acid such as basic metal sulfonates, basic metal phenates, and basic metal carboxylates can be used as a rust preventing additive. These are generally in liquid form, so they can be used by themselves in the formation of a lubricating coating. As an extreme pressure additive, any substances known as such, which include sulfur-, phosphorus-, or chlorine-containing substances and organic acid metal salts, may be used. In order to increase the coating thickness of the applied oil, a fine powder or fibers of a polymer, a resin, or an inorganic compound or the like can be added. Among these, it is preferable to use an oil which contains a basic metal salt of an organic acid and optionally one or both of an organic zinc compound as an extreme pressure additive and a resin fine powder, or to use a basic metal salt of an organic acid alone. A preferred basic metal salt of an organic acid is a basic metal sulfonate.

As a solid lubricant for the solid lubricating coating, a metal chalcogenide (lead oxide, molybdenum disulfide, tungsten disulfide, tungsten diselenide, and the like), graphite, boron nitride, PTFE, and the like can be used. As a binder, either an organic resin (such as an epoxy, an acrylic, a phenolic, a polyamide, a polyamide-imide, or other resin) or an inorganic film-forming compound (such as a silicate or a phosphate) can be used. In addition, an organometallic compound (such as titanium alkoxide or other metal alkoxide) which can form a metal oxide type inorganic coating (such as a titanium oxide coating) by the sol-gel method can be used as a binder. A solid lubricating coating can be formed by various known methods, but usually by application of a liquid coating composition and subsequent heating.

### Examples

Now the present invention will be described in further detail by examples.

The surface treatment shown in Table 2 (formation of an undercoating layer and formation of a lubricating coating) was carried out on the contact surface (namely on the threaded portion and the unthreaded metal contact portion) of one or both of the pin and box of a threaded joint (outer diameter of steel pipe: 7 inches (177.8 mm), wall thickness: 0.4 inches (10.16 mm)) capable of metal-to-metal sealing. The joint (steel pipe and coupling) was made from carbon steel (A), a 13%Cr steel (B), a 13%Cr stainless steel (C), or a high alloy steel (D) (galling occurring most easily with D, and galling becoming successively more difficult with C, B, and A) having a composition shown in Table 1. As shown in Figure 1, a pin was formed on the outer circumferential surface of both ends of the pipe, and a box was formed on the inner circumferential surface at both ends of a coupling.

Of the methods of forming the undercoating layer shown in Table 2, flame spraying, which was performed with Cu, was carried out using a plasma flame spraying apparatus. Fine Cu powder was accelerated using Ar gas as a carrier, and it was impinged in a molten state on the contact surface to form a coating thereon. The flow rate of the Ar gas was varied, and the impact speed of molten particles at the substrate (the contact surface of the box) was controlled to adjust the porosity of the resulting coating.

The blast coating which was performed with Zn was carried out using blast particles having an Fe core coated with Zn (Z Iron manufactured by Dowa Iron Powder Industry, Japan). The particle diameter and the blasting speed of the blast particles were controlled to adjust the porosity of the resulting coating (the porosity increasing as the particle diameter increases and the blasting speed decreases).

Electroplating which was performed with Ni, Au, Sn, and Cu employed normal electroplating solutions for each metal to which a fine powder of an organic resin (PTFE resin) was added. Electroplating was performed on the contact surface of the inner surface of the box while stirring the plating solution, and an electroplated coating containing the dispersed fine resin powder was formed thereon. Deposition of plating metal on the outer surface of the box was prevented by sealing the outer surface. Then, the box was heated in air at approximately 600°C to combust and vaporize organic substances and form pores in the electroplated coating. The porosity was adjusted by controlling the amount of resin particles added to the plating solution.

For comparison, a conventional undercoating layer formed by nitriding and manganese phosphate chemical conversion treatment was also prepared.

The thickness and porosity of the undercoating layer were measured with an optical microscope. In order to determine the porosity, the threaded portion was divided in the longitudinal direction into approximately 5 equal parts, the central portion in the direction of the cross section of the undercoating layer formed on the threads of each threaded part was observed with an optical microscope (at 500X), the percent of area occupied by pores was measured, and the average of the percent of pore area for a total of 5 locations was recorded as the porosity. The hardness (Hv) of the undercoating layer was measured using a Vickers hardness tester.

Of the lubricating coatings, the liquid lubricating coating was either mineral oil to which approximately 50 mass % of a basic metal sulfonate (a basic calcium sulfonate having a base number of 200 mg KOH/g) and a small amount of an organozinc compound-type extreme pressure additive were added ("oil + sulfonate" in Table 2), or the basic metal sulfonate alone ("sulfonate" in Table 2). This liquid lubricant was applied with a brush atop the undercoating layer to form a liquid lubricating coating. The thickness depends primarily on the viscosity of the liquid lubricant, so in some cases, a suitable amount of a phenolic resin powder was added as a thickening agent.

For the solid lubricating coating, molybdenum disulfide (MoS₂) powder having an average particle diameter of approximately 15 µm or graphite powder having an average particle diameter of approximately 1 µm was used as a solid lubricant. Of the binders, a phenolic resin, a polyamide-imide resin, or a polyamide resin was used as an organic resin. As a binder capable of forming an inorganic coating, a titanium alkoxide (titanium tetraisopropoxide) was used. A titanium alkoxide, when heated in air, forms an inorganic titanium oxide coating by hydrolysis and condensation.

A solid lubricating coating was formed by applying a liquid composition comprising a solution of the binder in which powder of the solid lubricant was dispersed with a brush atop the undercoating layer followed by drying with heating. The heating temperature depended upon the binder and was approximately 230°C for a phenolic resin, approximately 260°C for a polyamide-imide resin, approximately 260°C for a polyamide resin, and approximately 150°C for titanium alkoxide.

The thickness of the liquid or solid lubricating coating which was formed was measured by observing its cross section with an optical microscope (100X).

Using threaded joints comprising a pin and a box and having an undercoating layer and a lubricant layer formed in this manner, a fastening and unfastening test was carried out 10 times with a fastening speed of 10 rpm and a fastening torque of 10340 ft-lbs (14019 N-m). When galling occurred during the test, subsequent fastening was carried out after performing surface adjustment or dressing, but the test was terminated at that point if the galling was severe and recoverable so that fastening could not be performed even with surface adjustment or unfastening was not possible. Galling resistance was evaluated based on the number of fastenings and unfastenings until the occurrence of unrecoverable galling.

Using a pin and a box which were treated in the same manner, fastening was carried out under the above-described conditions, and the fastened joint was kept at a temperature of 250°C for 100 hours. Following holding the joint at this high temperature, the joint was unfastened and the state of peeling of the surface treatment (undercoating layer + lubricant layer) was visually observed.

The results of the above measurements and tests are together shown in Table 2.

**Table 1**

| Steel | Steel Composition (mass%, bal: Fe) | | | | | |
|---|---|---|---|---|---|---|
| | C | Si | Mn | Cr | Ni | Mo |
| A | 0.24 | 0.3 | 1.3 | 0.17 | 0.007 | 0.04 |
| B | 0.19 | 0.2 | 0.8 | 12. 5 | 0.1 | 0.05 |
| C | 0.01 | 0.25 | 0.5 | 12 | 6 | 2 |
| D | 0.01 | 0.3 | 0.5 | 25 | 50 | 6.48 |

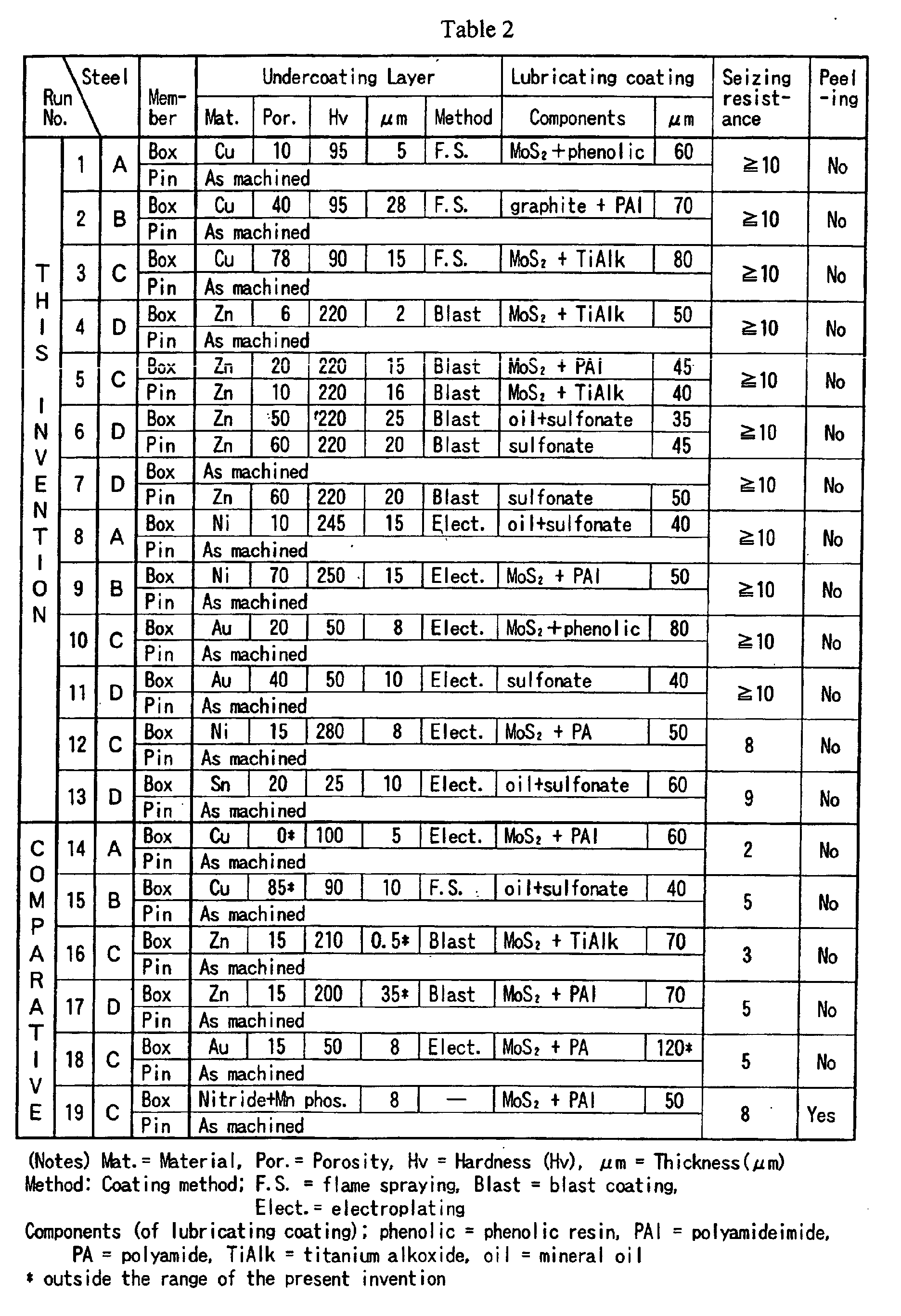

As can be seen from Table 2, threaded joints for steel pipes according to the present invention each had excellent galling resistance. In particular, those for which the hardness of the undercoating layer was in the preferred range of 50 - 250 Hv could be fastened and unfastened at least 10 times, and the galling resistance was extremely good. In addition, when unfastening was performed after holding for 100 hours at 250°C in a fastened state, coating peeling was not observed, so there was no problem with respect to adhesion even at a high temperature. Accordingly, adequate galling resistance can be exhibited even in a high temperature oil well.

In contrast, in the Comparative Examples, if the undercoating layer was not porous, or if it was porous but its thickness was small, an effect of improving galling resistance due to a porous undercoating layer was not obtained, and the galling resistance enormously decreased. The galling resistance also decreased in the case when the porosity of the porous undercoating layer was too large, or its thickness was too great, or the total thickness of the undercoating layer and the lubricating coating was too large. Furthermore, when the undercoating layer was a manganese phosphate coating, the adhesion of the lubricating coating was inadequate, so the lubricating coating peeled after holding at a high temperature.

### Industrial Applicability

According to the present invention, a threaded joint for steel pipes having excellent galling resistance which can prevent the occurrence of galling and a decrease in airtightness at the time of repeated fastening and unfastening can be provided at a relatively low cost, and such advantages can be attained even in drilling for crude oil in high temperature environments and even though a threaded joint is made of a high Cr steel which is a material relatively susceptible to galling without using a liquid lubricant containing heavy metal powder such as a compound grease.

## Claims

1. A threaded joint for steel pipes comprising a pin and a box each having a contact surface including a threaded portion and an unthreaded contact portion,
**characterized in that** the contact surface of at least one of the pin and the box is coated with a metallic undercoating layer and a lubricating coating layer thereon, the undercoating layer has a porosity of 5 - 80% and a thickness of 1 - 30 µm, the lubricating coating layer is comprised of a solid lubricating coating or a liquid lubricating coating, the latter containing substantially no heavy metal powders, and the total thickness of the undercoating layer and the lubricating coating layer is at most 100 µm.

2. A threaded joint for steel pipes as claimed in claim 1 wherein the undercoating layer has a hardness of 50 - 250 Hv.

3. A threaded joint for steel pipes as claimed in claim 1 or claim 2 wherein the undercoating layer is formed by electroplating, blast coating, or flame spraying.

4. A threaded joint for steel pipes as claimed in claim 1 or claim 2 wherein the undercoating layer is formed of a metal selected from Zn, Cu, Ni, Sn, Cr, Al, Co, precious metals, and alloys thereof.

5. A threaded joint for steel pipes as claimed in claim 1 or claim 2 wherein the lubricating coating layer is a liquid lubricating coating which consists essentially of a basic metal salt of an organic acid or which contains a basic metal salt of an organic acid.

6. A threaded joint for steel pipes as claimed in claim 1 or claim 2 wherein the lubricating coating layer comprises a solid lubricant and a binder which can form an organic or inorganic coating.
